# EUROPEAN PATENT SPECIFICATION

(11) **EP 3 832 149 B1**
(45) Date of publication and mention of the grant of the patent: **11.11.2026**
(21) Application number: 20208233.5
(22) Date of filing: 27.09.2018
(51) Int. Cl.: F16B 15/00, F16B 15/08, H02G 3/00, H02G 3/32

(54) **CABLE STAPLE ASSEMBLY**
KABELSTAPELANORDNUNG
ENSEMBLE AGRAFE DE CÂBLE

(30) Priority: 29.09.2017 US 201715719766
(43) Date of publication of application: 09.06.2021
(62) Document number(s) of the earlier application(s) in accordance with Art. 76 EPC: 18786629.8 / 3 688 320
(73) Proprietor: Black & Decker Inc., New Britain, CT 06053 (US)
(72) Inventor: FAIRBANKS, Jonathan W., Coventry, RI 02816 (US); SAREAULT, James, Bend, Oregon 97703 (US); WATERMAN, Richard, West Linn, OR 97068 (US)
(74) Representative: Slingsby Partners LLP

(56) References cited:
- GB-A- 2 539 105
- GB-A- 797 766
- US-A- 3 241 797
- US-A- 5 718 548
- US-A1- 2008 179 371
- US-B1- 9 422 962

## Description

### FIELD

The present disclosure relates to cable staple assemblies provided in stick form for use with a staple driving tool.

### BACKGROUND

This section provides background information related to the present disclosure which is not necessarily prior art.

Cable staple assemblies provided in stick form typically include frangible connectors between adjacent pairs of connectors. As a lead staple subassembly in a staple driving tool is driven, the frangible connectors between it and the second staple are broken. The frangible connectors that are broken in a driving operation are only on the trailing side of the lead staple subassembly. Thus, the breaking of the frangible connectors can cause problematic counterclockwise rotation of the lead staple subassembly as it travels through the drive channel of the tool. It would be desirable to provide a consistent, reliable way of causing the lead staple subassembly to either remain aligned with, or to rotate slightly clockwise (which is much less problematic), as it travels through the drive channel of the tool.

The depth to which a staple is driven by a staple driving tool can be impacted by various parameters, including wood type/density, grain location, tool nose position, and insulator attachment strength. Depending on how the user adjusts the depth of drive setting on the tool or holds the tool relative to the work surface, the staple insulator can be driven too shallowly or too deeply, which can unduly bite into the outer insulation of the electrical cable and damage or otherwise compromise the integrity of the electrical wiring. It would be desirable to provide a consistent, reliable way of snugging the staple insulator against the electrical cable without unduly biting into the cable over a large range of variations in the depth to which a staple is driven.

US5,718,548 relates to a staple assembly for use in a stapling tool. US2008/0179371A1 relates to a portable fastener driving device. US9,422,962B1 relates to a collated staple strip assembly.

### SUMMARY

This section provides a general summary of the disclosure, and is not a comprehensive disclosure of its full scope or all of its features.

In accordance with one aspect of the present disclosure, a cable staple assembly for use with a staple driving tool having a driver and a cooperating breaking portion can be provided. The cable staple assembly can include a plurality of insulator bodies having frangible connectors extending between adjacent pairs of the insulator bodies. Each of the insulator bodies can have a counteracting frangible portion, and an insulator bridge extending between a pair of leg recesses. The frangible connectors alone can extend between and couple the plurality of insulator bodies together into a strip. Each counteracting frangible portion can be spaced from the frangible connectors and can be coupled solely to a single one of the plurality of insulator bodies. In addition, the cable staple assembly can include a plurality of staples. Each staple can have a pair of legs extending from opposite ends of a staple crown with the pair of legs being received in the pair of leg recesses of one of the insulator bodies.

In accordance with the present invention there is provided a cable staple assembly according to claim 1.

Further areas of applicability will become apparent from the description provided herein. The description and specific examples in this summary are intended for purposes of illustration only and are not intended to limit the scope of the present disclosure.

### DRAWINGS

The drawings described herein are for illustrative purposes only of selected embodiments and not all possible implementations, and are not intended to limit the scope of the present disclosure.
Fig. 1 is a perspective view of one example embodiment of a cable staple assembly for use with a staple driving tool in accordance with the present disclosure.
Fig.2 is a perspective view of one of the insulator bodies of the cable staple assembly of Fig. 1.
Fig. 3A is a partial cross-sectional view of a lead end of the cable staple assembly of Fig. 1 mounted in the nosepiece of a staple driving tool.
Fig. 3B Is an enlarged portion of the Fig. 3A.
Fig. 4 is a partial top plan view of a leading end of the cable staple assembly of Fig. 1.
Fig. 5 is a partial cross-sectional exploded view of the cable staple assembly of Fig. 1.
Fig. 6 is a cross-sectional view of the cable staple assembly of Fig. 1 in a pre-driven, shipping or undeformed state.
Fig. 7 is a cross-sectional view of the cable staple assembly of Fig. 1 in a post-driven, deployed or deformed state.

Corresponding reference numerals indicate corresponding parts throughout the several views of the drawings.

### DETAILED DESCRIPTION

Example embodiments will now be described more fully with reference to the accompanying drawings.

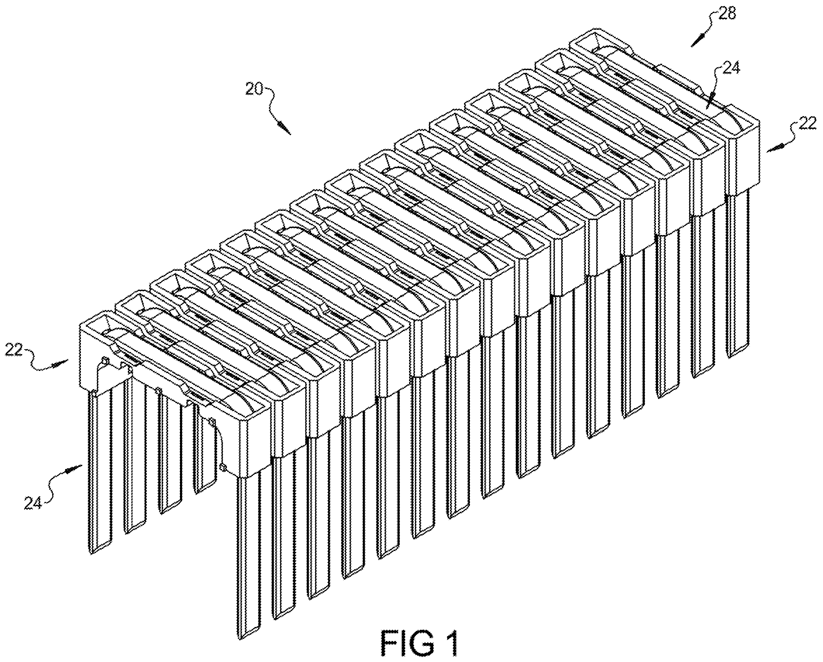

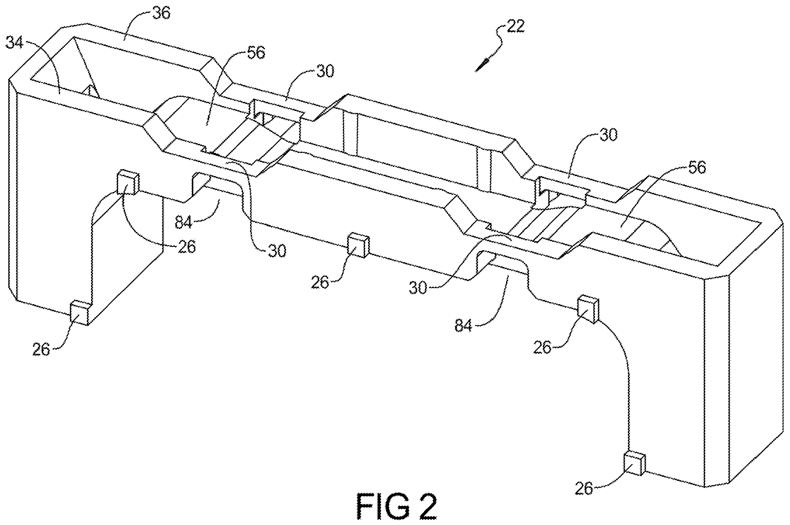

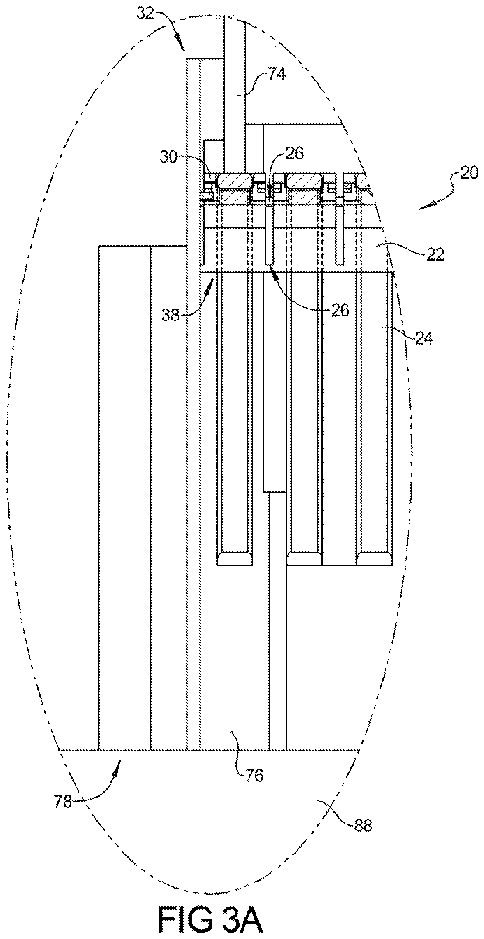

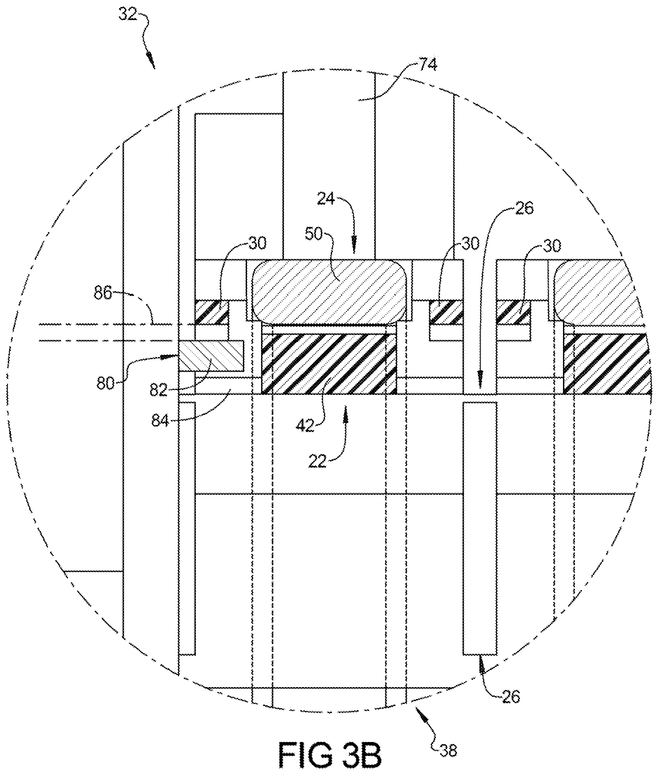

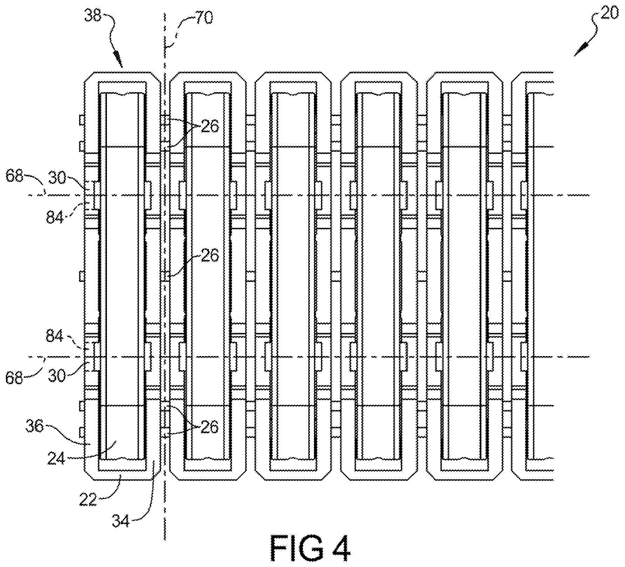

Figs. 1-7 illustrate one example embodiment of a cable staple assembly 20 in accordance with the present disclosure. This example cable staple assembly 20 generally includes a plurality of insulator bodies 22 and a plurality of staples 24. The insulator bodies 22 can have frangible connectors 26 that extend between and couple adjacent pairs of the plurality of insulator bodies 22 together into a strip 28. Thus, each frangible connector 26 is coupled at its ends to different, adjacent ones of insulator bodies 22.

Each insulator body 22 can additionally also include at least one counteracting frangible portion 30 that is separate or spaced from, or independent of, the frangible connectors 26. Breaking the frangible connectors 26 between an adjacent pair of insulator bodies 22 alone is sufficient to separate the adjacent pair of insulator bodies 22 from each other. In contrast, breaking the counteracting frangible portions 30 does not result in separation of the adjacent pairs of insulator bodies 22. This is because the counteracting frangible portions 30 are not coupled at ends to adjacent insulator bodies 22 like the coupling frangible connectors 26. Each counteracting frangible portions 30 is coupled solely to a single one of the insulator bodies 22. For example, both ends of the counteracting frangible portions 30 are coupled to the same insulator body 22.

The counteracting frangible portions 30 can extend longitudinally between opposite connected ends in a portion direction that is substantially parallel to direction or plane 70, which extends substantially parallel to the longitudinal leading and trailing sides 36 and 34, respectively, of the insulator bodies 22. The counteracting frangible portions 30 can be designed to shear or break across a portion cross-section generally indicated by plane 68, which extends substantially perpendicular to the longitudinal leading and trailing sides 36 and 34, respectively, of the insulator bodies 22. For example, a recess 84 can be provided in the longitudinal leading side 36 of the insulator body 22 and a corresponding counteracting frangible portion 30 can span across an upper end of each recess 84. Opposite ends of each counteracting frangible portion 30 can be connected to opposite sides of the corresponding recess 84.

As in the illustrated embodiment, the leading side 36 of each insulator body 22 can include multiple counteracting frangible portions 30. For example, each leading side 36 can include two counteracting frangible portions 30, and the counteracting frangible portions 30 can be positioned equidistant from or balanced around a longitudinal center of the longitudinal leading side 36 of each insulator body 22. Similarly, the sides 36 and 38 of each insulator body 22 can include multiple frangible connectors 26, and the frangible connectors of each longitudinal side can be positioned equidistant from or balanced around a longitudinal center of the longitudinal leading side of each insulator body 22. For example, the sides of each insulator body 22 can include five frangible connectors 26, with two pairs balanced around a longitudinal center of the longitudinal side of each insulator body 22, and one positioned on the longitudinal center.

The frangible connectors 26 can extend longitudinally between opposite connected ends in a connector direction that is substantially parallel to direction or plane 68, which extends substantially perpendicular to the longitudinal leading and trailing sides 36 and 34, respectively, of the insulator bodies 22. The frangible connectors 26 can be designed to break across a connector cross-section generally indicated by plane 70, which extends substantially parallel to the longitudinal leading and trailing sides 36 and 34, respectively, of the insulator bodies 22. Thus, the frangible connector 26 and counteracting frangible portions 30 can extend in longitudinal directions that are substantially perpendicular to each other, and can be designed to break across cross-sections that are substantially perpendicular to each other.

The insulator bodies 22 of the example embodiment are symmetrical so that either end of the cable staple assembly 20 can be inserted into a staple driving tool 32 as the leading end. In any event, the frangible connectors 26 are provided on the trailing side 34 of each connector body 22, while the counteracting frangible portions 30 are provided on the opposite, leading side 36 of each connector body 22. The dual breaking or shearing of the frangible connectors 26 and the counteracting frangible portions 30 on opposite sides of the insulator bodies 22 as the lead subassembly 38 is driven from the tool 32 can counteract problematic rotation of the lead staple and connector body sub-assembly 38 within the drive channel 76 of the tool 32, as described hereinafter.

Each insulator body 22 can have an insulator bridge 42 extending between a pair of leg recesses 40. Each staple 24 has a pair of legs 48 that extend from opposite ends of a staple crown 50. The legs 48 are respectively received in the leg recesses 40 of one of the insulator bodies 22. An upper end of each leg recess 40 can provide a narrowed portion or pinch point 46 that engages against the staple legs 48 adjacent where the crown 50 and legs 48 meet. The narrowed portions 46 can frictionally engage the staple legs 48 to help retain the position of the insulator body 22 relative to the staple 24 in a shipping configuration. For example, the insulator body 22 can be positioned and retained at an upper end of the staple 24, with the insulator bridge 42 receiving or engaging the staple crown 50 so that all of the driving force of the tool 32 goes to setting the staple 24 and not to also sliding the insulator body 22 from a bottom end to the top end of the staple 24. Outer lateral sides 52 of the leg recesses 40 of the insulator body 22 can be tapered laterally outwardly and downwardly from the narrowed portion or pinch point 46 to facilitate outward rotation or pivoting of the insulator legs 66 and arching of the insulator bridge 42 as described hereinafter.

The insulator bridge 42 can have an upper bridge profile 44 defined by an upper surface of the insulator bridge 50. The staple crown 50 can have a lower crown profile 54 defined by a lowermost surface of the staple crown 50 that is directly adjacent to, and directly opposing the upper surface or upper bridge profile 44. The upper bridge profile 44 can be defined by two raised end portions 56 and/or a recessed or lowered central portion 58 extending between the two raised end portions 56. The lower crown profile 54 of the staple 24 can extend between and along the opposite ends 60 and can be substantially linear, planar or flat. Thus, the lower crown profile 54 and the upper bridge profile 44 can have opposite end portions 58 and 60, respectively, that engage against each other adjacent the opposite ends of the staple crown 50 while central portions 58 and 62 are spaced from each other to provide a central space 64 between central portions 58 and 62 of the insulator bridge 42 and the staple crown 50. This central space 64 enables the central portion 58 of the bridge 42, including its upper bridge surface or profile 44, to arch upwardly without engaging against the adjacent, opposing central portion 62 of the staple crown 50, including its lower crown surface or profile 54.

The cable staple assembly 20 can further be designed to interact with the cable staple driving tool 32 and a cable 72 as described herein. The cable staple driving tool 32 can include a nosepiece 78 including a driver 74 and a drive path or channel 76. The nosepiece 78 can additionally include at least one cooperating breaking portion 80. The cooperating breaking portion 80 can be in the form of two protrusions 82. As the lead staple and connector body sub-assembly 38 is moved into position or alignment with the drive channel 76, the cooperating breaking portion 80 is received within the recess 84 of the leading side 36 of the insulator body 22.

When initially received within the recess 84 of the insulator body 22, the protrusion 82 can be vertically spaced from the corresponding counteracting frangible portion 30, leaving a vertical gap 86 therebetween. The counteracting frangible portion 30 is designed to be spaced from the cooperating breaking portion 80 of the staple driving tool 32 during an initial period of the staple setting operation of the tool. During the staple setting operation of the tool 32, the driver 74 engages the staple 24. The resulting movement of the lead staple and connector body sub-assembly 38 can initially act upon the frangible connectors 22, but not on the counteracting frangible portions 30 until the lead sub-assembly 38 moves sufficiently to close the gap 86. This can help cause the frangible connectors 22 to break simultaneously with or before the counteracting frangible portions 30 break. This can help reduce the possibility that the sub-assembly 38 will rotate problematically counterclockwise as it travels through the drive channel 76. This can also help increase the possibility that the sub-assembly 38 will remain substantially aligned with the drive channel or will rotate slightly clockwise as it travels through the drive channel 76.

Because the counteracting frangible portions 30 are independent of the frangible connectors 26 as noted above, they have not been impacted or modified by the separation of the prior adjacent insulator and staple subassembly at the point in time that each subassembly becomes the lead subassembly 38 within the staple driving tool 32. This means that both the relevant frangible connectors 26 and counteracting frangible portions 30 of the lead staple subassembly 38 remain in their original or designed state. As such, both the relevant frangible connectors 26 and counteracting frangible portions 30 of the lead subassembly 38 retain their original designed force required to break or shear them. This makes the behavior of both the relevant frangible connectors 26 and counteracting frangible portions 30 much more predictable. Thus, the relative balancing of the forces on opposite sides 34 and 36 of the lead subassembly 38 as the relevant frangible connectors 26 and counteracting frangible portions 30 are broken or sheared can be reliably controlled, known, and repeatably provided.

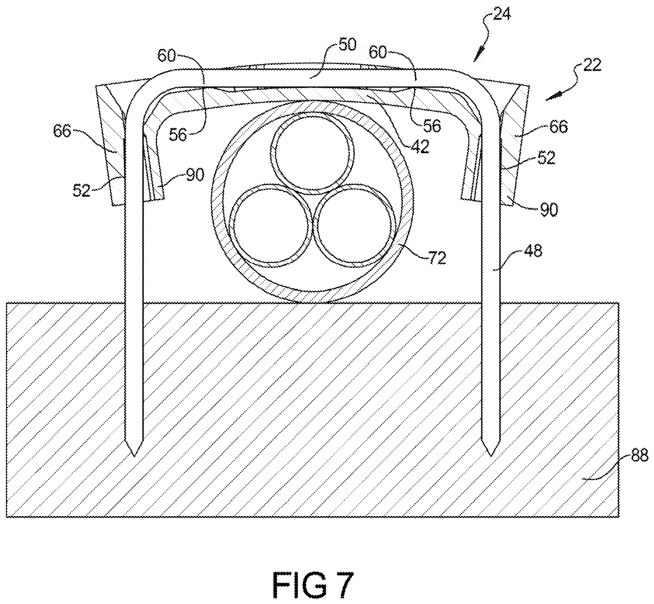

The staple 24 can be designed to transfer a driving force from the driver 74 to the insulator body 22 by engagement of the lower crown profile 54 of the staple 24 against the upper bridge profile 44 of the insulator body 22. With particular reference to Fig. 7, as the sub-assembly 38 is set into a base 88, such as a wooden 2-by-4, around an electrical cable 72, the electrical cable 72 can engage an underside of the central portion 58 of the insulator bridge 42. The central portion 58 of the insulator bridge 42 can be deformable by arching upward toward the central portion 52 of the staple crown 50 without the central portions contacting each other, at least until the space 64 closes.

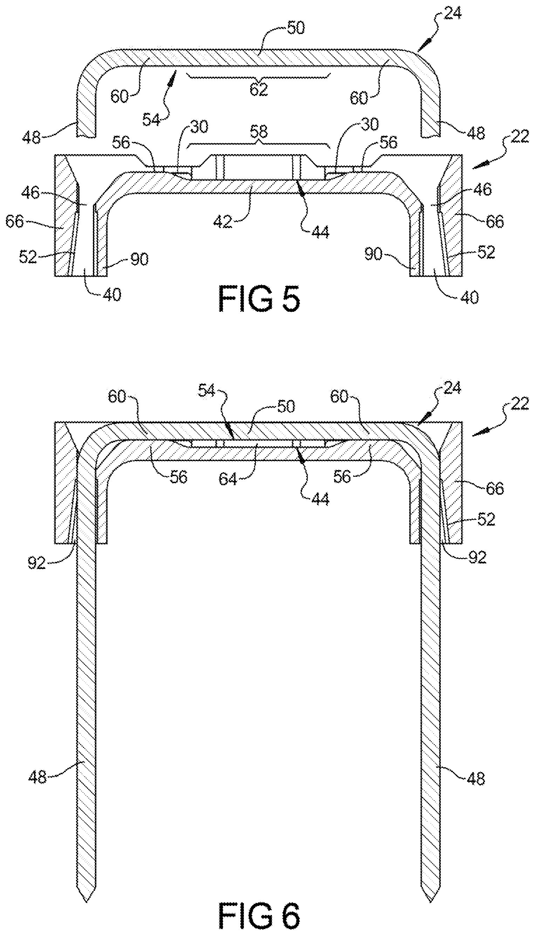

As central portion 58 of the insulator bridge 42 arches upwardly toward the staple crown 50, the insulator legs 66 can rotate inwardly toward each other at their lower ends 90. As shown in Fig. 6, the outwardly and downwardly tapered outer lateral sides 52 can provide a space or gap between the outer side of the staple leg 48 and the corresponding outer lateral side 52 of the leg recess 40 at the lower end 90 of the insulator leg 66. As shown in Fig. 7, the insulator legs 66 can rotate inwardly toward each other at their lower ends 90 without contacting the tapered outer lateral sides 52, at least initially. This can facilitate rotational movement of the insulator legs 66 as the central portion 58 of the insulator bridge 42 arches upwardly toward the staple crown 50.

As should be apparent, designing the insulator bridge 42 to be deformable upwardly toward the staple crown 50 and into the central space 64 reduces the biting force of the insulator body 22 on the electrical cable 72. In effect, the deformation of the insulator bridge 42 operates like a spring, reducing the force on the electrical cable 72, while allowing the staple legs 48 to move deeper into the base 88. Similarly, designing the lower ends 90 of the insulator legs 66 to be rotatable toward the corresponding staple legs 48 and into a space 92 provided therebetween by the tapered outer lateral sides 52 of the leg recess 40 can also reduce the biting force of the insulator body on the electrical cable 72. In effect, this operates like a reduction in the spring constant of the insulator bridge 42, reducing the biting force of the insulator body 22 on the electrical cable 72, while allowing the staple legs 48 to move deeper into the base 88. Thus, these can individually and collectively provide a broader range of driver force settings of the staple driving tool 32 that are large enough to hold the electrical cable 72, but not so large that the insulator body 22 problematically bites into the electrical cable 72 and damages it.

The foregoing description of the embodiments has been provided for purposes of illustration and description.

## Claims

1. A cable staple assembly (20) comprising:
a plurality of insulator bodies (22) frangibly coupled together into a strip, each insulator body (22) having an insulator bridge (42) extending between a pair of leg recesses (40), the insulator bridge (42) having an upper bridge profile (44);
a plurality of staples (24), each staple having a pair of legs (48) extending from opposite ends of a staple crown (50) having a lower crown profile (54) with the pair of legs (48) being received in a respective pair of leg recesses (40) of one of the insulator bodies (22) and with the lower crown profile (54) opposing the upper bridge profile (44); and
the lower crown profile (54) and the upper bridge profile (44) having opposite end portions engaging each other adjacent the opposite ends of the staple crown (50) and **characterised by** the lower crown profile (54) and the upper bridge profile (44) having central portions spaced from each other between the engaging opposite end portions to provide a central space (64) between corresponding central portions of the insulator bridge (42) and the staple crown (50).

2. The cable staple assembly of claim 1, wherein the staple is designed to transfer a driving force to the insulator body by engagement of the lower crown profile of the staple against the upper bridge profile of the insulator body in use.

3. The cable staple assembly of claim 1, wherein the central portion of the insulator bridge is deformable by arching upward toward the central portion of the staple crown without the central portions contacting each other.

4. The cable staple assembly of claim 1, wherein each of the opposite end portions of the upper bridge profile of each of the insulator bodies comprises a raised portion.

5. The cable staple assembly of claim 4, wherein the lower crown profile of the staple is substantially linear.

6. The cable staple assembly of claim 1, wherein the central portion of the upper bridge profile of each of the insulator bodies is recessed relative to the opposite end portions of the upper bridge profile.

7. The cable staple assembly of claim 1, wherein the pair of leg recesses have tapered lateral outer sides to facilitate rotational movement of the leg recesses as the central portion of the insulator bridge arches toward the central portion of the staple crown.

8. The cable staple assembly of claim 1, wherein an upper end of each of the leg recesses has a pinch point frictionally engaging the staple legs and outer lateral sides of the leg recesses taper outward from the pinch point.

## Patentansprüche

1. Kabelklammeranordnung (20), umfassend:
eine Vielzahl von Isolatorkörpern (22), die zerbrechlich zu einem Streifen miteinander gekoppelt sind, wobei jeder Isolatorkörper (22) eine Isolatorbrücke (42) aufweist, die sich zwischen einem Paar von Schenkelaussparungen (40) erstreckt, wobei die Isolatorbrücke (42) ein oberes Brückenprofil (44) aufweist;
eine Vielzahl von Klammern (24), wobei jede Klammer ein Paar von Schenkeln (48) aufweist, die sich von gegenüberliegenden Enden einer Klammerkrone (50) erstrecken, die ein unteres Kronenprofil (54) aufweist, wobei das Paar von Schenkeln (48) in einem jeweiligen Paar von Schenkelaussparungen (40) von einem der Isolatorkörper (22) aufgenommen ist und wobei das untere Kronenprofil (54) dem oberen Brückenprofil (44) gegenüberliegt; und
das untere Kronenprofil (54) und das obere Brückenprofil (44) gegenüberliegende Endabschnitte aufweisen, die benachbart zu den gegenüberliegenden Enden der Klammerkrone (50) miteinander eingreifen, und **dadurch gekennzeichnet, dass** das untere Kronenprofil (54) und das obere Brückenprofil (44) zentrale Abschnitte aufweisen, die zwischen den eingreifenden gegenüberliegenden Endabschnitten voneinander beabstandet sind, um einen zentralen Raum (64) zwischen entsprechenden zentralen Abschnitten der Isolatorbrücke (42) und der Klammerkrone (50) bereitzustellen.

2. Kabelklammeranordnung nach Anspruch 1, wobei die Klammer dazu ausgelegt ist, eine Antriebskraft auf den Isolatorkörper durch Eingriff des unteren Kronenprofils der Klammer an dem oberen Brückenprofil des Isolatorkörpers in Verwendung zu übertragen.

3. Kabelklammeranordnung nach Anspruch 1, wobei der zentrale Abschnitt der Isolatorbrücke verformbar ist, indem er sich nach oben zu dem zentralen Abschnitt der Klammerkrone wölbt, ohne dass die zentralen Abschnitte einander kontaktieren.

4. Kabelklammeranordnung nach Anspruch 1, wobei jeder der gegenüberliegenden Endabschnitte des oberen Brückenprofils von jedem der Isolatorkörper einen erhöhten Abschnitt umfasst.

5. Kabelklammeranordnung nach Anspruch 4, wobei das untere Kronenprofil der Klammer im Wesentlichen linear ist.

6. Kabelklammeranordnung nach Anspruch 1, wobei der zentrale Abschnitt des oberen Brückenprofils von jedem der Isolatorkörper relativ zu den gegenüberliegenden Endabschnitten des oberen Brückenprofils ausgespart ist.

7. Kabelklammeranordnung nach Anspruch 1, wobei das Paar von Schenkelaussparungen verjüngte laterale Außenseiten aufweist, um Drehbewegung der Schenkelaussparungen zu erleichtern, wenn sich der zentrale Abschnitt der Isolatorbrücke zu dem zentralen Abschnitt der Klammerkrone wölbt.

8. Kabelklammeranordnung nach Anspruch 1, wobei ein oberes Ende von jeder der Schenkelaussparungen einen Klemmpunkt aufweist, der reibschlüssig mit den Klammerschenkeln eingreift, und sich äußere laterale Seiten der Schenkelaussparungen von dem Klemmpunkt nach außen verjüngen.

## Revendications

1. Ensemble agrafe de câble (20) comprenant :
une pluralité de corps (22) d'isolateur couplés de manière à pouvoir être cassés les uns aux autres en une bande, chaque corps (22) d'isolateur comportant un pont (42) d'isolateur s'étendant entre une paire d'évidements (40) de pattes, le pont (42) d'isolateur comportant un profil de pont supérieur (44) ;
une pluralité d'agrafes (24), chaque agrafe comportant une paire de pattes (48) s'étendant à partir des extrémités opposées d'une couronne (50) d'agrafe possédant un profil de couronne inférieur (54), ladite paire de pattes (48) étant reçue dans une paire respective d'évidements (40) de pattes de l'un des corps (22) d'isolateur et le profil de couronne inférieur (54) étant opposé au profil de pont supérieur (44) ; et
le profil de couronne inférieur (54) et le profil de pont supérieur (44) comportant des parties d'extrémité opposées se mettant en prise les unes avec les autres adjacentes aux extrémités opposées de la couronne (50) d'agrafe et **caractérisé en ce que** le profil de couronne inférieur (54) et le profil de pont supérieur (44) comportent des parties centrales espacées les unes des autres entre les parties d'extrémité opposées se mettant en prise pour fournir un espace central (64) entre les parties centrales correspondantes du pont (42) d'isolateur et de la couronne (50) d'agrafe.

2. Ensemble agrafe de câble de la revendication 1, ladite agrafe étant conçue pour transférer une force d'entraînement au corps d'isolateur par mise en prise du profil de couronne inférieur de l'agrafe contre le profil de pont supérieur du corps d'isolateur lors de l'utilisation.

3. Ensemble agrafe de câble de la revendication 1, ladite partie centrale du pont d'isolateur étant déformable en s'arquant vers le haut vers la partie centrale de la couronne d'agrafe sans que les parties centrales ne soient en contact l'une avec l'autre.

4. Ensemble agrafe de câble de la revendication 1, chacune des parties d'extrémité opposées du profil de pont supérieur de chacun des corps d'isolateur comprenant une partie surélevée.

5. Ensemble agrafe de câble de la revendication 4, ledit profil de couronne inférieur de l'agrafe étant sensiblement linéaire.

6. Ensemble agrafe de câble de la revendication 1, ladite partie centrale du profil de pont supérieur de chacun des corps d'isolateur étant en retrait par rapport aux parties d'extrémité opposées du profil de pont supérieur.

7. Ensemble agrafe de câble de la revendication 1, ladite paire d'évidements de patte possédant des côtés externes latéraux coniques pour faciliter le mouvement de rotation des évidements de patte tandis que la partie centrale du pont d'isolateur s'arque vers la partie centrale de la couronne d'agrafe.

8. Ensemble agrafe de câble de la revendication 1, une extrémité supérieure de chacun des évidements de patte possédant un point de pincement venant en prise par frottement avec les pattes d'agrafe et des côtés latéraux externes des évidements de patte s'effilant vers l'extérieur à partir du point de pincement.
